# EUROPEAN PATENT APPLICATION

(11) **EP 3 835 665 A1**
(43) Date of publication of application: **16.06.2021**
(21) Application number: 19383107.0
(22) Date of filing: 12.12.2019
(51) Int. Cl.: F24D 3/08, F24H 1/50, F28D 20/00, F24D 3/18, F24D 11/02

(54) **TANK AND METHOD FOR OPERATING A THERMAL INSTALLATION**

(71) Applicant: Domusa Calefaccion, S. Coop., 20737 Errezil (ES)
(72) Inventor: ARGOITIA AIZPURU, Mikel, 20750 ZUMAIA (ES); URIA EPELDE, Juan Luís, 20720 AZKOITIA (ES); CASTANDER MARTIN, Daniel, 48930 GETXO (ES)
(74) Representative: Igartua, Ismael

(57) **Abstract**

Tank suitable for a thermal installation for DHW and HVAC, the tank comprising an upper chamber (3) with an auxiliary tank (5) configured for housing domestic water, the upper chamber (3) being configured for housing water for HVAC, and a lower chamber (4) configured for housing the water for HVAC returning from a HVAC circuit (30), both chambers (3, 4) being communicated with one another through at least one opening (14). The tank (2) comprises at least one check valve (7) in the corresponding opening (14), and configured to allow the circulation of water for HVAC from the lower chamber (4) to the upper chamber (3) and to prevent the circulation of water for HVAC from the upper chamber (3) to the lower chamber (4). The present invention also relates to a thermal installation comprising the tank and to a method of operating the thermal installation.

## Description

### TECHNICAL FIELD

The present invention relates to a tank suitable for a thermal installation for DHW and/or HVAC (heating, ventilation and air conditioning), to a thermal installation for DHW and HVAC, and to a method of operating the thermal installation.

### PRIOR ART

Aerothermal installations comprising a heat pump suitable for causing the heating or cooling of a room and/or DHW (domestic hot water) are known in the state of the art. These installations comprise a tank housing domestic water which will circulate through the corresponding DHW circuit, and water for HVAC which will circulate through the corresponding HVAC circuit.

WO 2013/093246 A1 discloses a thermal installation comprising a heat pump and a tank including an upper chamber and a lower chamber. The upper chamber feeds the DHW circuit whereas the lower chamber feeds the heating circuit. The system comprises a three-way valve which allows directing the fluid to the upper chamber and/or to the lower chamber depending on the needs for DHW or heating required. The fluid exiting the heat pump is directed to the lower chamber when the temperature of the fluid is higher than a threshold temperature, that threshold temperature being equal to 60°.

EP 2837894 A1 discloses an installation for heating a domestic water circuit and a heating water circuit for a room. The installation comprises at least one heat pump, a DHW tank comprising an exchanger, a primary water circuit comprising a three-way valve arranged after the heat pump and before the exchanger, being suitable for being connected to the heating circuit, an electric heater arranged in the primary water circuit between the heat pump and the three-way valve, configured for providing heat, and control means for controlling the three-way valve and said electric heater depending on the needs for DHW and heating.

EP 2397778 A1 discloses a tank comprising an upper chamber and a lower chamber. The tank includes an auxiliary tank which houses domestic water and is arranged such that it is housed in the upper chamber. The lower chamber includes a first exchanger of a heat pump in the lower part, and a second exchanger fed by an auxiliary generator is housed in the upper part of the lower chamber. Both chambers are separated by a wall including an opening through which both chambers are connected to one another. The water outlet conduit to the heating is connected in the upper part of the lower chamber, whereas the return conduit is connected to the lower part of the lower chamber, particularly the return conduit is connected to the inner tube of the first exchanger.

Finally, DE 102004051986 A1 discloses a combination tank for supplying DHW and heating water, operated with different energy sources, with at least one DHW tank and a heating water tank. The heating water tank is divided into an upper chamber and a lower chamber, an auxiliary DHW tank being arranged such that it is housed entirely in the upper chamber, the domestic water of the auxiliary tank being heated through the heating water. In the lower chamber there is at least one heat exchanger which is fed through auxiliary heat generators, such as solar cells, heat pumps, wood stoves, etc., and introduces the energy generated by these auxiliary heat generators in the lower chamber of the tank. When the desired temperature is reached in the lower chamber, a connection through a thermostatic valve between both chambers of the tank is opened such that the upper chamber is heated by means of gravity-driven circulation through the lower chamber. To assure gravity-driven circulation, a return flow is also provided between both chambers. This assures that the energy generated by auxiliary generators only reaches the upper chamber through the heat exchanger when the desired operating temperature for the DHW has been reached. If the temperature is not reached, energy can be saved by supplying preheated heating water from the lower part to the conventional heat generator, such as gas heating, oil heating, or the like, such that the costs of the conventional energy demand can be considerably reduced in this case. Water is driven from the lower chamber to the conventional generator which heats said water and sends it to the heating circuit and the higher part of the upper chamber. The heating circuit returns to the lower chamber of the tank.

### DISCLOSURE OF THE INVENTION

The object of the invention is to provide a tank suitable for a thermal installation which provides DHW and/or HVAC, a thermal installation which provides DHW and/or HVAC, and a method of operating DHW and/or HVAC, as defined in the claims.

One aspect of the invention relates to a tank comprising an upper chamber inside which there is housed an auxiliary tank configured for housing domestic water, the upper chamber being configured for housing water for HVAC, and a lower chamber configured for housing the water for HVAC returning from a HVAC circuit, the upper chamber and lower chamber being communicated with one another through at least one opening. The tank comprises at least one check valve arranged in the corresponding opening, and configured to allow the circulation of water for HVAC from the lower chamber to the upper chamber when the water for HVAC returns from the HVAC circuit and to prevent the circulation of water for HVAC from the upper chamber to the lower chamber.

Another aspect of the invention relates to a thermal installation for providing DHW and/or HVAC comprising a heat pump, an auxiliary generator, and the tank, fluidically communicated with the heat pump and with the auxiliary generator, respectively, the heat pump and/or the auxiliary generator being configured for heating the water for HVAC of the upper chamber of the tank to provide heating and/or to heat the domestic water housed in the auxiliary tank, and the heat pump being configured for cooling the water for HVAC to provide cooling.

Finally, another aspect of the invention relates to a method of operating the thermal installation for DHW and HVAC, comprising:
- An HVAC operating mode in which the water for HVAC enters the lower chamber, with the check valve allowing the passage of water for HVAC from the lower chamber to the upper chamber, the water for HVAC being driven from the upper chamber to the heat pump where the water for HVAC is heated or cooled, and/or
- a DHW operating mode in which the water for HVAC of the upper chamber is driven to the heat pump and/or to the auxiliary generator where the water for HVAC is heated, subsequently returning to the upper chamber for heating the domestic water housed in the auxiliary tank.

In this manner, in addition to obtaining an optimized tank, better stabilization of the temperature at which the water for HVAC exits the tank to the heat pump is achieved.

These and other advantages and features of the invention will become evident in view of the drawings and detailed description of the invention.

### DESCRIPTION OF THE DRAWINGS

Figure 1 shows a schematic view of a thermal installation for DHW and HVAC comprising a tank according to the invention, wherein the installation fed by a heat pump operates in the HVAC mode.
Figure 2 shows another schematic view of the thermal installation for DHW and HVAC shown in Figure 1, wherein the installation fed by an auxiliary generator operates in the heating mode.
Figure 3 shows another schematic view of the thermal installation for DHW and HVAC shown in Figure 1, wherein the installation fed by a heat pump and an auxiliary generator operates in the heating mode.
Figure 4 shows another schematic view of the thermal installation for DHW and HVAC shown in Figure 1, wherein the installation fed by a heat pump operates in the DHW mode.
Figure 5 shows another schematic view of the thermal installation for DHW and HVAC shown in Figure 1, wherein the installation fed by an auxiliary generator operates in the DHW mode.
Figure 6 shows another schematic view of the thermal installation for DHW and HVAC shown in Figure 1, wherein the installation fed by a heat pump and an auxiliary generator operates in the DHW mode.
Figure 7 shows another schematic view of the thermal installation for DHW and HVAC shown in Figure 1, wherein the installation operates in the HVAC mode fed by the heat pump and in the DHW mode fed by the auxiliary generator.

### DETAILED DISCLOSURE OF THE INVENTION

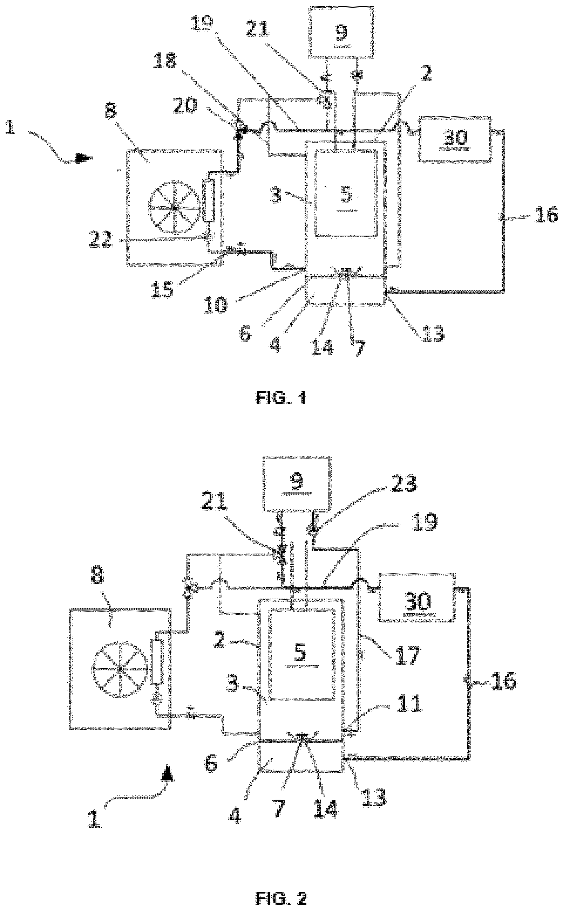

Figures 1 to 6 show a thermal installation 1 for DHW and heating, ventilating and air-conditioning (HVAC) with a tank 2 according to the invention. The abbreviation, DHW, refers to domestic hot water.

The thermal installation 1 further comprises a heat pump 8, an auxiliary generator 9, and a HVAC circuit 30, the tank 2 being fluidically communicated with the heat pump 8, with the auxiliary generator 9, and with the HVAC circuit 30. The auxiliary generator 9 can be any type of combustion boiler. The HVAC circuit 30 can supply heating or cooling to a room depending on the operating mode being chosen. The HVAC circuit 30 comprises heat-exchanging elements or equipment such as radiators, radiant floor, air-conditioning equipment, fan coil units, etc., and cold-exchanging elements or equipment (air-conditioning equipment, fan coil units, etc.). The HVAC circuit 30 comprises the control elements required for operating in the heating mode or cooling mode. The particular features of the HVAC circuit 30 are not object of the invention, so the description thereof is not considered necessary in order to understand the invention.

The tank 2 according to the invention comprises an upper chamber 3 inside which there is housed an auxiliary tank 5 configured for housing domestic water, the upper chamber 3 being configured for housing water for HVAC, and a lower chamber 4 configured for housing the water for HVAC returning from the HVAC circuit 30, the upper chamber 3 and lower chamber 4 being communicated with one another through at least one opening 14. Water for HVAC is understood to be the water which is housed in the tank and will circulate through the HVAC circuit, the heat pump 8, and/or the auxiliary generator 9.

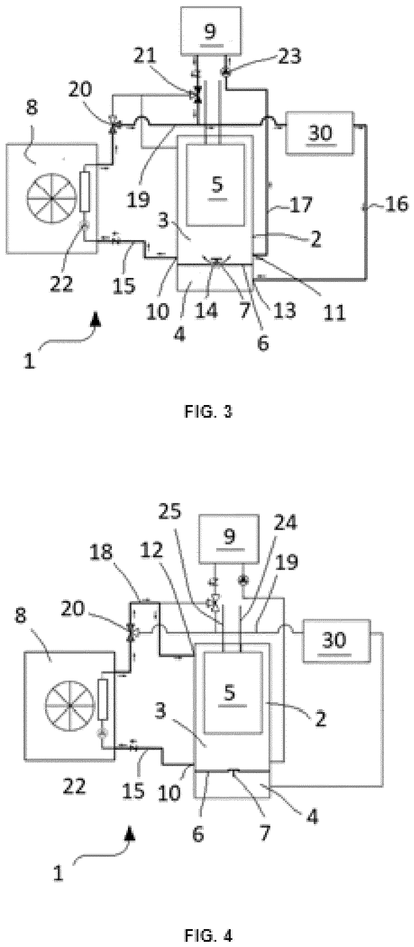

The tank 2 further comprises at least one check valve 7 configured to allow the circulation of water for HVAC from the lower chamber 4 to the upper chamber 3 when the thermal installation 1 operates in a HVAC mode (operating mode shown in Figures 1 to 3). The check valve 7 prevents the fluid communication between the lower chamber 4 and the upper chamber 3 through the corresponding opening 14 when the thermal installation 1 operates in a DHW mode (operating mode shown in Figures 4 to 6). Furthermore, in any of the operating modes of the thermal installation 1, the check valve 7 prevents the passage of water for HVAC from the upper chamber 3 to the lower chamber 4.

The tank 2 comprises a separating wall 6 separating the upper chamber 3 from the lower chamber 4, the separating wall 6 including the corresponding opening 14. The separating wall 6 is a planar wall which thermally insulates both chambers 3 and 4.

In the embodiment shown in the drawings, the tank 2 comprises a check valve 7. In a preferred embodiment, the opening 14 is arranged such that it is centered in the separating wall 6. In one embodiment of the invention, the opening 14 is a hole with a circular section.

The heat pump 8 is configured for heating the water for HVAC to provide heating in the HVAC circuit 30 and/or to heat the domestic water housed in the auxiliary tank 5. The heat pump 8 can also be configured for cooling the water for HVAC to provide cooling in the HVAC circuit 30. Moreover, the auxiliary generator 9 is configured for heating the water for HVAC of the lower chamber 4 of the tank 2 to provide heating and/or to heat the domestic water housed in the auxiliary tank 5.

The upper chamber 3 comprises a first connection port 10 arranged in the lower part of the upper chamber 3. The first connection port 10 is configured for being fluidically communicated with the return of the heat pump 8, return being understood to be the inlet with respect to the heat pump 8.

The upper chamber 3 further comprises a second connection port 11 configured for being fluidically communicated with the return of the auxiliary generator 9, return being understood to be the inlet of the auxiliary generator 9. The second connection port 11 is arranged in the lower part of the upper chamber 3.

The upper chamber 3 further comprises a third connection port 12 configured for being fluidically communicated with the exit of the heat pump 8 or the exit of the auxiliary generator 9, exit being understood to be the outlet of the heat pump 8 or the outlet of the auxiliary generator 9, the third connection port 12 being arranged in the upper part of the upper chamber 3. In this manner, the water for HVAC entering the upper chamber 3 is hot water for HVAC that is heated by the heat pump 8 and/or the auxiliary generator 9, the water for HVAC heating the domestic water existing in the auxiliary tank 5.

The lower chamber 4 comprises a connection port 13 configured for being fluidically connected with the return of the HVAC circuit 30 through a return conduit 16.

Moreover, the auxiliary tank 5 comprises a domestic water inlet 24 and a domestic water outlet 25, the domestic water inlet 24 and the domestic water outlet being connected to a DHW circuit not depicted in the drawings.

Moreover, the thermal installation 1 comprises a drive pump 22, comprised in the heat pump 8, driving the water for HVAC from the lower part of the upper chamber 3 of the tank 2 through a drive conduit 15 connecting the first connection port 10 with the drive pump 22 of the heat pump 8. In other non-depicted embodiments, the drive pump 22 can be arranged outside the heat pump 8. Hereinafter, the drive pump 22 of the heat pump 8 will be referred to as first drive pump 22.

The thermal installation 1 comprises a second drive pump 23, arranged in the return of the auxiliary generator 9, for driving the water for HVAC from the upper chamber 3 of the tank 2 through a drive conduit 17 of the auxiliary generator 9 connecting the second connection port 11 with the second drive pump 23.

Moreover, the thermal installation 1 further comprises at least one three-way valve 20 which allows the installation to operate in the HVAC mode and/or the DHW mode. In the embodiment shown in the drawings, the thermal installation 1 comprises a first three-way valve 20 that can be fluidically connected with the outlet or exit of the heat pump 8, with the HVAC circuit 30 through a HVAC conduit 19, and/or with the upper chamber 3 of the tank 2 through a connection conduit 18, said connection conduit 18 being connected with the third connection port 12 of the upper chamber 3.

The thermal installation 1 further comprises a second three-way valve 21 that can be fluidically connected with the outlet or exit of the auxiliary generator 9, with the upper chamber 3 through the connection conduit 18, and/or with the HVAC circuit 30 through the HVAC conduit 19.

Another aspect of the invention relates to the method of operating the thermal installation 1 defined throughout the description. The method of operating comprises a HVAC operating mode and/or a DHW operating mode.

When the thermal installation 1 operates in the HVAC operating mode, it can operate in a heating mode or a cooling mode. In both cases (heating mode or cooling mode), the water for HVAC returning from the HVAC circuit 30 enters the lower chamber 4 of the tank 2 through the return conduit 16, with the check valve 7 allowing the passage of water for HVAC from the lower chamber 4 to the upper chamber 3, the water for HVAC being driven from the upper chamber 2 to the heat pump 8, subsequently returning to the HVAC circuit 30.

Figure 1 shows the thermal installation 1 operating in the HVAC operating mode, with the water for HVAC being heated or cooled only through the heat pump 8. In this operating mode, the first three-way valve 20 allows the fluid communication between the heat pump 8 and the HVAC conduit 19, preventing circulation to the connection conduit 18 of the water for HVAC to the upper chamber 3. The water for HVAC is driven by means of the first drive pump 22 to the heat pump 8 where said water for HVAC is heated or cooled to a given temperature (output temperature), being directed to the HVAC circuit 30, and subsequently returning to the lower chamber 4 of the tank 2 at a lower temperature (if it operates in the heating mode) or at a higher temperature (if it operates in the cooling mode) with respect to the output temperature of the heat pump 8.

Figure 2 shows the thermal installation 1 operating in the heating operating mode, with the water for HVAC being heated only through the auxiliary generator 9. In this operating mode, the first drive pump 22 is not in operation. The second drive pump 23 is in operation, driving the water for HVAC from the lower part of the upper chamber 3 to the auxiliary generator 9. The second three-way valve 21 allows the fluid communication of the water for HVAC exiting the auxiliary generator 9, where it has been heated to a predetermined output temperature, with the HVAC conduit 19 preventing the circulation of water for HVAC to the connection conduit 18 to the upper chamber 3. The water for HVAC is directed to the HVAC circuit 30 through the HVAC conduit 19, subsequently returning to the lower chamber 4 of the tank 2 through the return conduit 16 at a lower temperature with respect to the output temperature of the auxiliary generator 9.

Figure 3 shows the thermal installation 1 operating in the heating operating mode, with the water for HVAC being heated or cooled mainly through the heat pump 8. The auxiliary generator 9 also cooperates in heating the water for HVAC. In other words, the main heat source heating the water for HVAC is the heat pump 8, with the auxiliary generator 9 being the auxiliary heat source required for heating the water for HVAC to a predetermined temperature. In this operating mode, the first drive pump 22 and the second drive pump 23 are in operation driving the water for HVAC from the lower part of the upper chamber 3 to the heat pump 8 and to the auxiliary generator 9, respectively. The first three-way valve 20 allows the fluid communication between the heat pump 8 and the HVAC conduit 19, preventing the circulation of the water for HVAC to the upper chamber 3. The second three-way valve 21 allows the fluid communication of the water for HVAC exiting the auxiliary generator 9 with the HVAC conduit 19, preventing the circulation of water for HVAC to the upper chamber 3. The water for HVAC is directed to the HVAC circuit 30 through the HVAC conduit 19 at a predetermined temperature, subsequently returning to the lower chamber 4 of the tank 2 through the return conduit 16 at a lower temperature with respect to the temperature at which it circulates through the HVAC conduit 19.

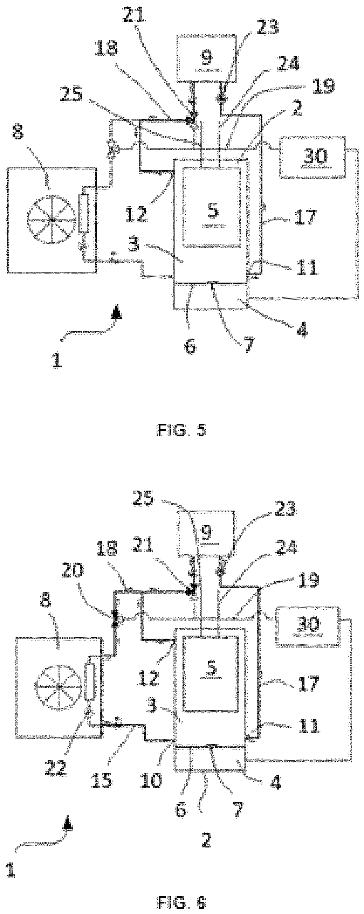

When the thermal installation 1 operates in the DHW operating mode (shown in Figures 4 and 5), i.e., providing domestic hot water, the check valve 7 prevents communication between the upper chamber 3 and the lower chamber 4, the water for HVAC from the upper chamber 3 being driven to the heat pump 8 and/or the auxiliary generator 9, subsequently returning to the upper chamber 3 through the connection conduit 18 for heating the domestic water housed in the auxiliary tank 5.

Figure 4 shows the thermal installation 1 operating in the DHW operating mode, with the water for HVAC which will subsequently heat the domestic water housed in the auxiliary tank 5 being heated only through the heat pump 8. In this operating mode, the first three-way valve 20 allows the fluid communication between the heat pump 8 and the upper chamber 3, preventing the circulation of the water for HVAC to the HVAC conduit 19. Furthermore, the second three-way valve 21 prevents circulation to the HVAC conduit 19 such that the water for HVAC exiting the heat pump 8 is directed only to the upper chamber 3 through the connection conduit 18. The water for HVAC is driven by means of the first drive pump 22 to the heat pump 8 where said water for HVAC is heated to a given output temperature, being directed to the upper chamber 3 and heating the domestic water of the auxiliary tank 5.

Figure 5 shows the thermal installation 1 operating in the DHW operating mode, with the water for HVAC being heated only through the auxiliary generator 9. In this operating mode, the first drive pump 22 is not in operation. The second drive pump 23 is in operation driving the water for HVAC from the lower part of the upper chamber 3 to the auxiliary generator 9.

The first three-way valve 20 prevents circulation to the HVAC conduit 19 and the heat pump 8. Furthermore, the second three-way valve 21 prevents circulation to the HVAC conduit 19 such that the water for HVAC exiting the auxiliary generator 9 is directed only to the upper part of the upper chamber 3 through the connection conduit 18. The water for HVAC is driven by means of the drive pump 23 to the auxiliary generator 9 where said water for HVAC is heated to a given output temperature, being directed to the upper chamber 3 and heating the domestic water of the auxiliary tank 5.

Figure 6 shows the thermal installation 1 operating in the DHW operating mode, with the water for HVAC which will subsequently heat the domestic water housed in the auxiliary tank 5 being heated mainly through the heat pump 8. The auxiliary generator 9 also cooperates in heating the water for HVAC. In other words, the main heat source heating the water for HVAC is the heat pump 8, with the auxiliary generator 9 being the auxiliary heat source required for heating the water for HVAC to a predetermined output temperature. In this operating mode, the first drive pump 22 and the second drive pump 23 are in operation driving the water for HVAC from the lower part of the upper chamber 3 to the heat pump 8 and the auxiliary generator 9, respectively. The check valve 7 does not allow communication between the upper chamber 3 and the lower chamber 4. The first three-way valve 20 allows the fluid communication between the heat pump 8 and the upper chamber 3, preventing the circulation of the water for HVAC to the HVAC conduit 19. The second three-way valve 21 allows the fluid communication of the auxiliary generator 9 with the upper chamber 3, preventing the fluid communication with the HVAC conduit 19. The water for HVAC is therefore directed to the tank 2 through the return conduit 18 at a predetermined temperature, heating the domestic water of the auxiliary tank 5.

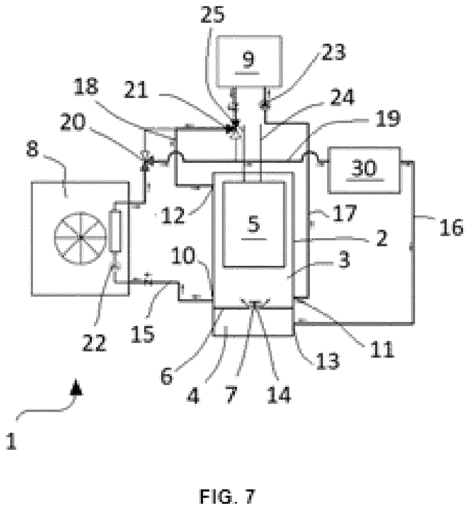

Figure 7 shows the thermal installation 1 operating in the HVAC and DHW operating mode, with the water for HVAC which will circulate to the HVAC circuit 30 being heated or cooled through the heat pump 8, whereas the water for HVAC which will subsequently heat the domestic water housed in the auxiliary tank 5 is heated through the auxiliary generator 9. In this case, the check valve 7 allows communication between the upper chamber 3 and the lower chamber 4. In this operating mode, the first drive pump 22 and the second drive pump 23 are in operation driving the water for HVAC from the lower part of the upper chamber 3 to the heat pump 8 and to the auxiliary generator 9, respectively. The first three-way valve 20 allows the fluid communication between the heat pump 8 and the HVAC circuit 30, preventing circulation to the upper chamber 3. The second three-way valve 21 allows the fluid communication between the auxiliary generator 9 with the upper chamber 3, preventing the fluid communication with the HVAC circuit 30. The water for HVAC circulating through the auxiliary generator 9 is directed to the tank 2 through the connection conduit 18 at a temperature higher than the temperature of the water for HVAC housed in the upper chamber 3, heating the domestic water of the auxiliary tank 5. The water for HVAC circulating through the heat pump 8 is directed to the HVAC circuit 30 through the HVAC conduit 19 at an output temperature, subsequently returning to the lower chamber 4 of the tank 2 through the return conduit 16 at a lower temperature (if it operates in the heating mode) or at a higher temperature (if it operates in the cooling mode) with respect to the output temperature of the heat pump 8.

Although the tank 2 comprises a check valve 7 in the embodiments shown in the drawings and described above, in other embodiments the tank 2 may comprise two or more check valves 7. In that case, the separating wall 6 will comprise the corresponding openings 14, such that each check valve 7 is arranged in the corresponding opening 14, preventing the passage of water for HVAC from the upper chamber 3 to the lower chamber 4 through said opening 14 and allowing the passage of water for HVAC from the lower chamber 4 to the upper chamber 3 through said opening 14. The features of the tank 2, of the thermal installation 1 as well as of the method of operating that have been described for a tank with a check valve 7 are applicable for a tank comprising more than one check valve 7.

Everything that has been described for the method of operating, in any of its embodiments and/or configurations, is also valid for the embodiments and/or configurations of the tank 2 and the thermal installation 1. In that sense, the tank 2 and the thermal installation 1 comprise the suitable embodiment and/or configuration for supporting the corresponding embodiment and/or configuration of the method.

Similarly, everything that has been described for the tank 2 and the thermal installation 1, in any of their embodiments and/or configurations, is also valid for the embodiments and/or configurations of the method. In that sense, the method comprises the embodiment and/or configuration that suit the corresponding embodiment and/or configuration of the tank and the thermal installation 1.

## Claims

**1.** Tank suitable for a thermal installation which provides DHW and HVAC, the tank comprising an upper chamber (3) inside which there is housed an auxiliary tank (5) configured for housing domestic water, the upper chamber (3) being configured for housing water for HVAC, a lower chamber (4) configured for housing the water for HVAC returning from a HVAC circuit (30), the upper chamber (3) and lower chamber (4) being communicated with one another through at least one opening (14), **characterized in that** the tank (2) comprises at least one check valve (7) arranged in the corresponding opening (14), and configured to allow the circulation of water for HVAC from the lower chamber (4) to the upper chamber (3) when the water for HVAC returns from the HVAC circuit (30) and to prevent the circulation of water for HVAC from the upper chamber (3) to the lower chamber (4).

**2.** Tank according to the preceding claim, wherein the upper chamber (3) comprises a first connection port (10) arranged in the lower part of the upper chamber (3) and configured for being fluidically communicated with the return of a heat pump (8).

**3.** Tank according to the preceding claim, wherein the upper chamber (3) comprises a second connection port (11) configured for being fluidically communicated with the return of an auxiliary generator (5), said second connection port (11) being arranged in the lower part of the upper chamber (3).

**4.** Tank according to the preceding claim, wherein the upper chamber (3) comprises a third connection port (12) configured for being fluidically communicated with the outlet of the heat pump (8) or of the auxiliary generator (5), the connection port (12) being arranged in the upper part of the upper chamber (3).

**5.** Tank according to any of the preceding claims, wherein the lower chamber (4) comprises a connection port (13) configured for being fluidically connected with the outlet of the HVAC circuit (30).

**6.** Tank according to any of the preceding claims, wherein the tank (2) comprises a separating wall (6) separating the upper chamber (3) from the lower chamber (4), the separating wall (6) including the opening (14).

**7.** Thermal installation for DHW and HVAC, comprising a heat pump (8), an auxiliary generator (9), and a tank (2) according to any of the preceding claims fluidically communicated with the heat pump (8) and with the auxiliary generator (9), respectively, the heat pump (8) and/or the auxiliary generator (9) being configured for heating the water for HVAC of the upper chamber (3) of the tank (2) to provide heating and/or to heat the domestic water housed in the auxiliary tank (5), and the heat pump (8) being configured for cooling the water for HVAC to provide cooling.

**8.** Thermal installation for DHW and HVAC according to the preceding claim, comprising a first three-way valve (20) that can be fluidically connected with the outlet of the heat pump (8), with a HVAC circuit (30), and/or with the upper chamber (3) of the tank (2), and a second three-way valve (21) that can be fluidically connected with the outlet of the auxiliary generator (9), with the upper chamber (3), and/or with the HVAC circuit (30).

**9.** Method of operating the thermal installation for DHW and HVAC according to claim 7 or 8, comprising:
• a HVAC operating mode in which the water for HVAC enters the lower chamber (4), with the corresponding check valve (7) allowing the passage of water for HVAC from the lower chamber (4) to the upper chamber (3), the water for HVAC being driven from the upper chamber (3) to the heat pump (8) and/or to the auxiliary generator (9) where the water for HVAC is heated or cooled, and/or
• a DHW operating mode in which the water for HVAC of the upper chamber (3) is driven to the heat pump (8) and/or to the auxiliary generator (9) where the water for HVAC is heated, subsequently returning to the upper chamber (3) for heating the domestic water housed in the auxiliary tank (5).

**10.** Method of operating the thermal installation for DHW and HVAC according to claim 8, comprising a HVAC operating mode in which the water for HVAC returning from the HVAC circuit (30) enters the lower chamber (4), with the corresponding check valve (7) allowing the passage of water for HVAC from the lower chamber (4) to the upper chamber (3), the water for HVAC being driven from the upper chamber (3) to the heat pump (8) and/or to the auxiliary generator (9) where the water for HVAC is heated, with the first three-way valve (20) allowing the circulation of the water for HVAC from the heat pump (8) to the heating circuit (30) through a HVAC conduit (19) and the first three-way valve (20) preventing the circulation of the water for HVAC to the upper chamber (3), and/or with the second three-way valve (21) allowing the circulation of the water for HVAC from the auxiliary generator (9) to the heating circuit (30) through the HVAC conduit (19) and the second three-way valve (21) preventing the circulation of the water for HVAC to the upper chamber (3).

**11.** Method of operating the thermal installation for DHW and HVAC according to claim 8, comprising a HVAC operating mode in which the water for HVAC returning from the HVAC circuit (30) enters the lower chamber (4), with the corresponding check valve (7) allowing the passage of water for HVAC from the lower chamber (4) to the upper chamber (3), the water for HVAC being driven from the upper chamber (3) to the heat pump (8) where the water for HVAC is heated or cooled, with the first three-way valve (20) allowing the circulation of the water for HVAC from the heat pump (8) to the heating circuit (30) through a HVAC conduit (19) and the first three-way valve (20) preventing the circulation of the water for HVAC to the upper chamber (3), and a DHW operating mode in which the water for HVAC of the upper chamber (3) is driven to the auxiliary generator (9) where the water for HVAC is heated, with the second three-way valve (21) allowing the circulation of the water for HVAC from the auxiliary generator (9) to the upper chamber (3) through a connection conduit (18) for heating the domestic water housed in the auxiliary tank (5) and said second three-way valve (21) preventing circulation to the heating circuit (30).

**13.** Method of operating the thermal installation for DHW and HVAC according to claim 8, comprising a DHW operating mode in which the water for HVAC of the upper chamber (3) is driven to the heat pump (8) and/or to the auxiliary generator (9) where the water for HVAC is heated, with the first three-way valve (20) allowing the circulation of the water for HVAC from the heat pump (8) to the upper chamber (3) through a connection conduit (18) for heating the domestic water housed in the auxiliary tank (5) and said first three-way valve (20) preventing circulation to the heating circuit (30) and/or with the second three-way valve (21) allowing the circulation of the water for HVAC from the auxiliary generator (9) to the upper chamber (3) through the connection conduit (18) for heating the domestic water housed in the auxiliary tank (5) and said second three-way valve (21) preventing circulation to the heating circuit (30).
